Europäisches Patentamt

European Patent Office

Office européen des brevets

(11) Numéro de publication: **0 084 990**
A2

(12) # DEMANDE DE BREVET EUROPEEN

(21) Numéro de dépôt: **83400072.1**

(51) Int. Cl.³: **A 01 G 3/08**

(22) Date de dépôt: **12.01.83**

(30) Priorité: **21.01.82 FR 8201047**

(43) Date de publication de la demande: **03.08.83**
**Bulletin 83/31**

(84) Etats contractants désignés: **CH DE FR GB IT LI**

(71) Demandeur: **Guiral, Michel, 40, rue du Salas, F-31520 Ramonville (FR)**
Demandeur: **Cadene, Yves, route de Roubis, F-12240 Rieupeyroux (FR)**
Demandeur: **Alauzet, Yvon, La Borie d'Hubert, F-12240 Rieupeyroux (FR)**
Demandeur: **A.M.D.E.S. (association des Maires pour le développement et l'emploi en Ségala), Mairie, F-12160 Baraqueville (FR)**

(72) Inventeur: **Guiral, Michel, 40, rue du Salar, F-31520 Ramonville (FR)**

(54) **Machine pour l'entretien des végétaux ligneux ou autres opérations à distance commandées.**

(57) La présente invention a pour objet une machine pour l'entretien des végétaux ligneux ou autres opérations à distance commandée.

La machine selon l'invention est constituée pricipalement par un bâti support (3), par un mât télescopique (4) orientable vers le végétal ligneux et vers la zone de celui-ci à traiter et par au moins un organe de traitement (6) par exemple un outil de coupe, orientable et déplaçable par rapport au mât.

La machine est particulièrement adaptée à l'émondage ou à l'élagage d'une manière sélective des végétaux ligneux.

0084990

La présente invention a pour objet une machine pour l'entretien des végétaux ligneux consistant par exemple en des opérations d'élagage ou d'émondage ou en des opérations de pulvérisations d'un produit pour éliminer les parasites ou autres
opérations à distance requérant de la précision.

Pour mécaniser les opérations d'élagage ou d'émondage, on a
mis en oeuvre une machine utilisant une série de couteaux
entourant le végétal ligneux et se déplaçant simultanément le
long de celui-ci.

Le principal inconvénient de cette machine est qu'elle ne permet pas une coupe sélective des branches.

En outre, la capacité réduite de cette machine constitue un
obstacle à son utilisation sur des végétaux ligneux de diamètre relativement important.

Pour la coupe sélective des branches en hauteur, une technique actuelle consiste à utiliser une nacelle pour approcher
un opérateur du lieu de coupe.

La coupe est effectuée dans ce cas à l'aide de moyens classiques, tronçonneuses et autres manoeuvrés par l'opérateur.

L'inconvénient de cette technique réside dans le fait que
l'utilisateur est situé à côté de la branche à couper et risque d'être blessé par la chute de celle-ci et/ou par les moyens
de coupe.

Pour éliminer les parasites d'une zone du végétal ligneux,
on ne peut sans recourir à des moyens importants traiter sélectivement la dite zone.

Habituellement, le produit est pulvérisé sur l'intégralité
du végétal ligneux.

La présente invention a pour but de pallier aux inconvénients
précédemment énoncés en mettant en oeuvre une machine qui permet une coupe sélective des branches des végétaux ligneux sans
amener l'opérateur à proximité de la branche à sectionner.

Un autre but de la présente invention est la mise en oeuvre
d'une machine qui autorise un traitement sélectif, par pulvérisation d'un produit toxique des zones des végétaux ligneux atteintes par les parasites.

A cet effet, la machine pour l'entretien des végétaux ligneux
selon la présente invention se caractérise essentiellement
en ce qu'elle est constituée par un bâti support doté de
moyens de mise à niveau et par un mât doté en extrémité d'un
ou plusieurs outils de traitement, constitué d'au moins deux
tronçons déplaçables l'un par rapport à l'autre suivant un mouvement de translation et/ou de rotation associé à des moyens
de variation de sa position angulaire par rapport au bâti par
rotation autour d'au moins un axe sensiblement vertical et
autour d'au moins un axe sensiblement horizontal et à des moyens
de commande de son déploiement, en sorte de s'orienter vers le
végétal ligneux vers la zone à traiter et de se rapprocher de
celle-ci.

Selon une autre caractéristique de l'invention, la machine
pour l'entretien des végétaux ligneux est dotée en bout du
mât d'une tête de travail portant au moins un outil de traitement, par exemple de coupe et l'organe moteur de celui-
ci, constitué d'au moins trois éléments actionnés chacun par
au moins un moyen de variation de leur position angulaire les
uns par rapport aux autres et par rapport au mât par rotation
chacun autour d'au moins un axe en sorte de positionner le dit
outil transversalement à la branche à sectionner quelle que soit
la position de celle-ci ou en sorte de positionner l'organe de
pulvérisation en regard de la zone à traiter, quelle que soit
la position de la dite zone.

D'autres avantages et caractéristiques de l'invention apparaîtront à la lecture de la description d'une forme préférentielle de réalisation donnée à titre d'exemple non limitatif en se référant aux dessins annexés en lesquels :

- La figure 1 est une vue en perspective de la machine selon l'invention équipée d'un outil de coupe.

- La figure 2 est une vue en plan du bâti support de la machine lorsqu'elle est positionnée sur un terrain en pente.

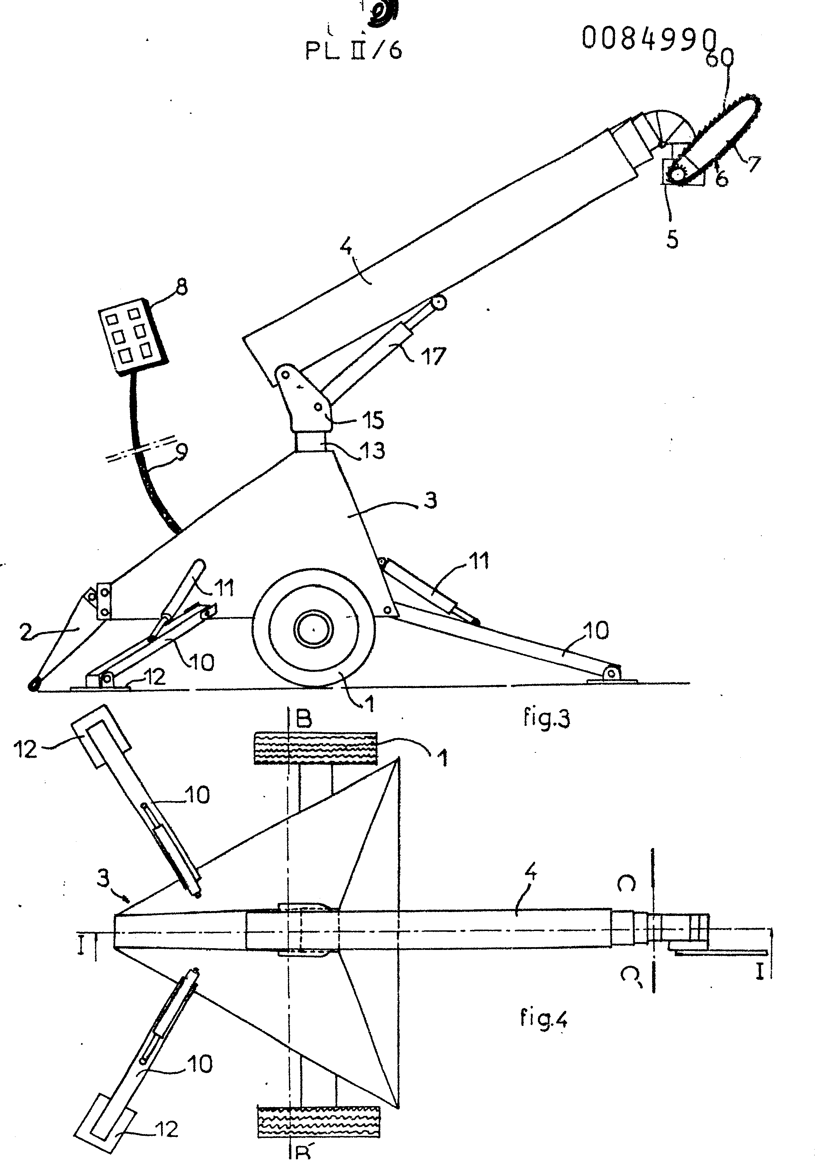

- La figure 3 est une vue de face, en plan de la machine selon l'invention.

- La figure 4 est une vue de dessus de la machine selon l'invention.

- La figure 5 est une vue en coupe partielle de la machine suivant la ligne I/I de la figure 4.

- La figure 5A est une vue d'un repère de signalisation de l'élongation du mât.

- La figure 6 est une vue en coupe transversale du mât suivant plusieurs plans de coupe.

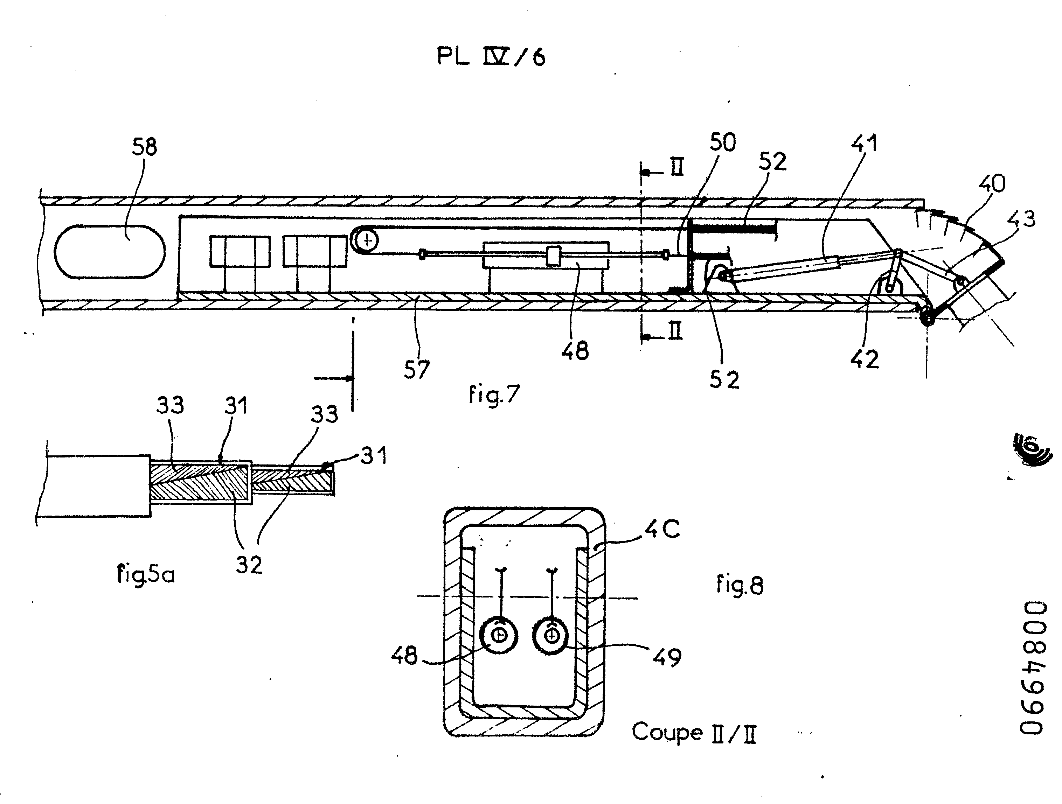

- La figure 7 est une vue en coupe longitudinale du dernier tronçon du mât.

- La figure 8 est une vue en coupe suivant la ligne II/II de la figure 7.

- La figure 9 est une vue en coupe de la tête de la machine.

- La figure 10 est une vue en coupe d'une première forme de réalisation de l'organe de verrouillage de l'outil de coupe de la machine.

- La figure 11 est une vue d'une seconde forme de réalisation de l'organe de verrouillage.

- Les figures 12 à 15 montrent les différentes positions occupées par la tête ou par l'outil de coupe.

- La figure 16 est une vue schématique du circuit hydraulique de la machine.

Telle que représentée la machine pour l'entretien des végétaux ligneux selon l'invention comporte un train d'organes de roulement 1 et un dispositif 2 d'attelage à un véhicule tracteur.

Par l'intermédiaire de sa prise de force, le véhicule tracteur fournit à la machine l'énergie nécessaire à son fonctionnement.

Selon une autre forme de réalisation, la machine est équipée d'un moteur thermique en sorte d'être autonome. La machine est constituée par un bâti support 3 doté de moyens de mise à niveau (10, 11, 12) et par un mât 4 doté en extrémité d'un ou plusieurs outils de traitement, constitué d'au moins deux tronçons déplaçables l'un par rapport à l'autre suivant un mouvement de translation et/ou de rotation, associé à des moyens de variation de sa position angulaire, par rapport au bâti, par rotation autour d'au moins un axe sensiblement vertical AA' et autour d'au moins un axe sensiblement horizontal BB' et à des moyens de commande de son déploiement en sorte de s'orienter vers le végétal ligneux vers la zone de celui-ci à traiter et de se rapprocher de la dite zone.

La machine est dotée en bout du mât 4 d'une tête de travail 5 portant au moins un outil de traitement 6 par exemple de coupe et l'organe moteur 7 de celui-ci constituée d'au moins tro éléments actionnés chacun par au moins un moyen de variation de leur position angulaire les uns par rapport autres et par rapport au mât par rotation chacun autour d'au moins un axe CC' ou DD' ou EE' en sorte de positionner le dit outil transversalement à la branche à sectionner quelle que soit la position
de celle-ci, ou en sorte de positionner l'organe de pulvérisation
en regard de la zone à traiter, quelle que soit la position de celle-
ci.

La machine est également dotée d'un boitier de commande 8 de ces
différents moyens et organes manoeuvrables au sol par l'opérateur
et relié à la machine par un câble 9 multifilaire de longueur relativement importante.
De ce fait, l'opérateur pourra se tenir écarté de la trajectoire
de chute des branches dans le cas où la machine est utilisée pour
l'élagage tout en manoeuvrant et en surveillant la coupe.

Le bâti support 3 est porté par les organes de roulement 1 et est
doté du dispositif 2 d'attelage au véhicule tracteur.
Ce bâti est de forme tétraédrique pour améliorer la rigidité et
offrir un volume pour recevoir les différents accessoires.
Contre une de ses parois latérales est fixée une chape d'articulation du dispositif d'attelage 2.
Ce dispositif est verrouillé dans la chape par une goupille lorsque la machine doit être déplacée.

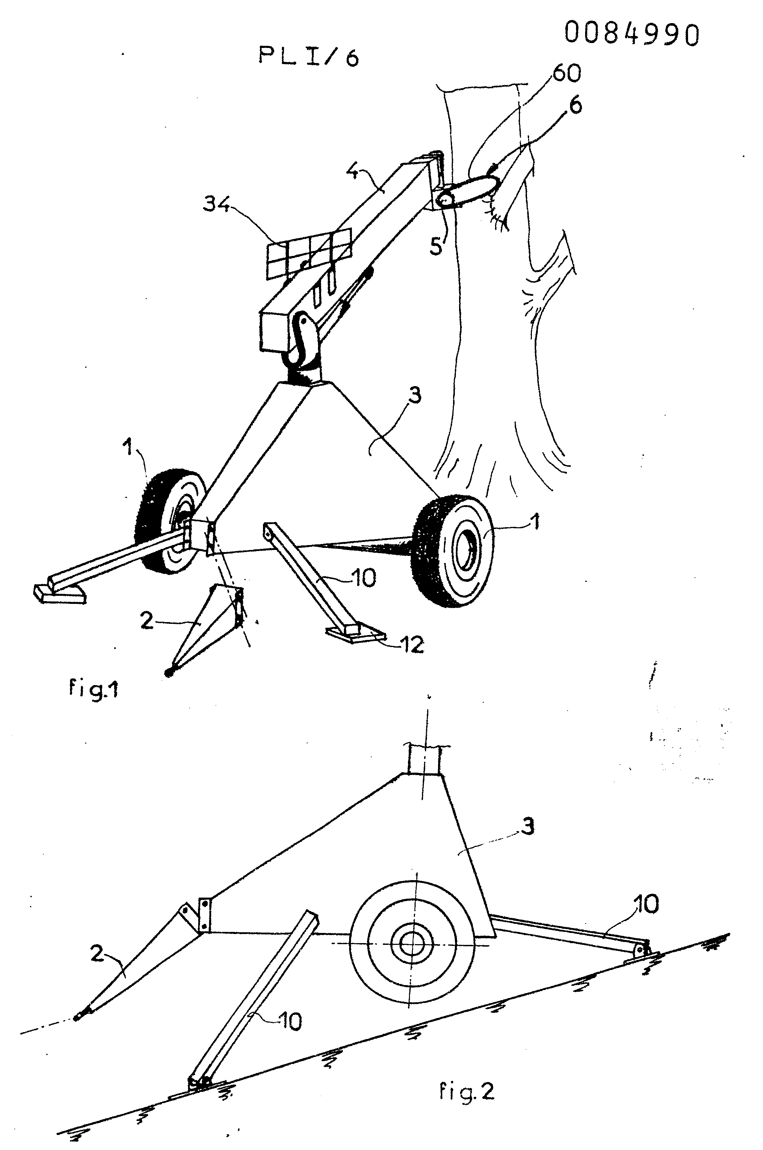

Au bâti sont associés les moyens de mise à niveau de la machine
sur des sols en pente ou au relief accidenté comme on peut le voir
en figure 2.
Ces moyens confèrent également à la machine une bonne stabilité
même lors du déport du mât d'un côté ou de l'autre du bâti support 5.
Ces moyens sont constitués par au moins deux pieds 10 espacés, actionnés par un vérin 11 et terminés par un patin 12 d'appui au sol.

Le bâti est doté d'une troisième point d'appui.
Ce point d'appui peut être identique aux précédents ou être obtenu
en utilisant le dispositif 2 restant appuyé sur sont attelage.

Le vérin 11 de chaque pied est articulé par une de ses extrémités au bâti et par l'autre au dit pied.

Les vérins 11 sont associés à un circuit hydraulique comportant une pompe P pour injecter le fluide hydraulique contenu dans un réservoir R dans les conduites du circuit de chaque vérin.

Le circuit de chaque vérin est doté d'un distributeur 11A à trois positions distinctes commandé par électro-aimant.

Ces trois positions sont relatives chacune au mouvement de sortie de la tige du vérin, au mouvement de rentrée et à l'arrêt de ces deux mouvements suivant l'une quelconque des positions qu'occupe la tige lors de son mouvement.

L'arrêt en position est obtenu lorsque le distributeur obture la conduite de la chambre arrière et la conduite de la chambre avant du vérin.

L'électro-aimant de chaque distributeur est commandé par un ou plusieurs boutons-poussoirs du boitier8.

Les vérins 11 sont commandés indépendamment les uns des autres en sorte que l'un d'entre eux puisse se déployer plus ou moins par rapport aux autres afin de compenser les différences de niveau du terrain.

Les patins 12 d'appui au sol sont constitués chacun par une plaque métallique montée, articulée en extrémité du pied correspondant.

Lors de la mise à niveau de la machine l'articulation du dispositif 2 à la chape peut être déverrouillée en sorte que l'anneau d'attelage de celui-ci au véhicule tracteur puisse descendre par rapport au bâti.

En extrémité supérieure du bâti, la machine est équipée des moyens de variation de la position angulaire du mât 4 par rotation autour d'au moins un axe AA' sensiblement vertical et autour d'un axe BB' sensiblement horizontal.

Les moyens de variation de la position angulaire du mât 4
par rotation autour de l'axe AA' sont constitués par un arbre 13 vertical rotatif dans au moins un palier 14 du bâti
support, par une chape 15 calée sur l'arbre 13 en dessus
du bâti dans laquelle est montée de manière articulée le
mât 4 suivant l'axe BB' et par un organe ou un système 16 d'entraînement  pour assurer la rotation de l'arbre 13 et donc
de la chape 15 autour de l'axe vertical AA' suivant un tour
ou une fraction de tour dans un sens ou dans l'autre en sorte
d'orienter le mât vers le végétal ligneux.

Le moyen de variation de la position angulaire du mât 4 par
rotation autour de l'axe BB' est constitué par un organe
extensible 17 lié à la chape et au mât pour assurer la variation de la position angulaire de celui-ci par rapport
à l'axe vertical AA' par rotation du dit mât autour de
son axe d'articulation BB' à la chape 15.

L'axe médian de l'arbre 13 est confondu avec l'axe vertical
AA'.
Cet arbre est doté d'un collet en dehors du bâti contre lequel vient se plaquer la chape 15.
Cette chape comporte deux ailes verticales réunies en partie
basse par une paroi d'épaisseur relativement importante.

Les ailes sont percées chacune suivant l'axe horizontal BB'
d'un orifice recevant l'extrémité de l'organe d'articulation
du mât 4 à la chape 15.
Dans l'épaisseur de la chape est ménagé un orifice cylindrique dans lequel est clavetée l'extrémité supérieure de l'arbre 13.

Par son extrémité inférieure cet arbre est accouplé au système d'entraînement 16.
Ce système connu en soit est du type de ceux conçus pour
transmettre à un arbre monté dans un palier un mouvement circulaire suivant un tour ou une fraction de tour dans un sens ou dans l'autre et pour permettre de bloquer le dit arbre en position.

C'est ainsi que le système 16 pourra être constitué par un organe moteur doté d'un arbre de sortie rotatif dans un sens ou dans l'autre et par un ou plusieurs organes de transmission du mouvement circulaire du dit arbre de sortie à l'arbre 13 et donc à la chape 15 et au mât 4.

A titre d'exemple, les organes de transmission peuvent être constitués par une vis sans fin axiale à l'arbre de sortie de l'organe moteur, actionnée par celui-ci, et par une roue dentée engrenée avec la dite vis et calée en extrémité inférieure de l'arbre 13.

L'irréversibilité du système vis sans fin et roue dentée permet le blocage en position du mât autour de son axe vertical de rotation dés que l'organe moteur du système 16 cesse d'être alimenté en énergie.

L'alimentation de l'organe moteur est commandée par exemple à partir de deux boutons poussoirs du boitier 8.

Ces deux boutons poussoirs sont affectés chacun à la commande d'un sens de rotation de l'arbre de sortie de l'organe moteur.

Suivant un autre exemple de réalisation, le système 16 est constitué par un organe extensible en prise avec des organes de transformation d'un mouvement linéaire en un mouvement rotatif communiqué à l'arbre 13.

Selon cette forme de réalisation, l'organe extensible est constitué par un vérin hydraulique et les organes de transformation par une crémaillère ou une chaîne actionnée par le vérin et par une roue dentée, engrenée avec la crémaillère et calée sur l'arbre 13.

Le circuit hydraulique d'alimentation du vérin comporte un
distributeur à trois positions distinctes affectées chacune à la commande du mouvement de sortie de la tige du vérin donc à la commande d'un premier sens de rotation de
l'arbre 13, à la commande du mouvement de rentrée de la tige donc à la commande du second sens de rotation de l'arbre 13 et à l'interruption de ces deux mouvements.

Le distributeur est actionné par un électro-aimant commandé
à partir du boitier 8 par des boutons poussoirs.

Selon un autre exemple de réalisation, l'arbre 13 est directement en prise avec un organe moteur constitué par exemple par un vérin hydraulique rotatif.
Le circuit hydraulique de ce vérin comporte un distributeur
16A à trois positions pour commander le mouvement de l'arbre 13 dans un sens ou dans l'autre et pour interrompre ce
mouvement.
Le distributeur 16A est actionné par électro-aimant commandé par des boutons poussoirs du boitier 8.

Cette troisième forme de réalisation du système 16 offre
l'avantage de ne pas nécessiter d'organes de transmission
du mouvement circulaire ou d'organes de transformation d'un
mouvement rectiligne en un mouvement rotatif.

De préférence la variation de la position angulaire du mât
par rapport au bâti par rotation autour de l'axe AA' s'effectue en deux mouvements rotatifs de vitesse différente.
Le mât est tout d'abord orienté vers le végétal ligneux d'une
manière approximative par une rotation rapide autour de l'axe
AA' ou autour d'un axe parallèle et orienté d'une manière
plus précise vers le végétal ligneux par une rotation lente.

A cet effet, les moyens de variation de la position angulaire du mât par rotation autour d'un axe vertical peuvent être montés sur un ensemble support mobile dans le bâti 3 autour d'un axe vertical parallèle à l'axe AA' ou confondu avec celui-ci et actionné par un organe moteur. L'ensemble rotatif est monté dans des paliers du bâti et est doté d'au moins un palier recevant l'arbre 13. Le moteur de l'ensemble rotatif actionne celui-ci en rotation au maximum sur un tour dans un sens ou dans l'autre.

Pour assurer la mobilité autour de l'axe AA' et son arrêt en position, le mât est associé à l'organe extensible 17. Cet organe est constitué de préférence par un vérin hydraulique alimenté par la pompe P, articulé d'une part au mât 4 et à la chape 15 sous le dit mât.

Le circuit hydraulique du vérin comporte un distributeur 18 à trois positions, commandé par électro-aimant. Chaque position du distributeur 18 est relative au mouvement de sortie de la tige du vérin conduisant au levage du mât par rotation autour de l'axe BB', au mouvement de rentrée de la tige du vérin conduisant à abaisser le mât par rotation autour de l'axe BB' et à l'arrêt de ces deux mouvements conduisant au blocage du mât suivant la position choisie par l'opérateur. Le mât 4 peut être mobile d'une position sensiblement horizontale à une position sensiblement verticale et peut être bloqué suivant une de ses deux positions extrêmes ou suivant une position intermédiaire quelconque.

Comme dit précédemment, le mât 4 est constitué d'au moins deux tronçons déplaçables l'un par rapport à l'autre suivant un mouvement de translation et ou de rotation en sorte de rapprocher la tête 5 de la branche à sectionner ou de la zone à pulvériser.

0084990

Les tronçons peuvent être articulés l'un à l'autre et associés à un organe de variation de la position angulaire
de l'un par rapport à l'autre ou peuvent selon un exemple
préférentiel de réalisation être montés en coulissement
l'un dans l'autre pour être déplaçables l'un par rapport
à l'autre suivant un mouvement de translation rectiligne.

Selon la forme préférentielle, le mât 4 est constitué
par trois tronçons 4A, 4B, 4C de préférence métalliques
comportant des moyens de guidage des uns par rapport aux
autres, et associés aux moyens de variation de la longueur
du dit mât.

De préférence, chaque tronçon présente une section transversale de forme rectangulaire ou carrée.
Le mât 4 est articulé à la chape 15 par son tronçon 4A.
A ce tronçon s'articule également le vérin 17.
Dans le tronçon 4A est monté le tronçon 4B recevant lui-
même le tronçon 4C.

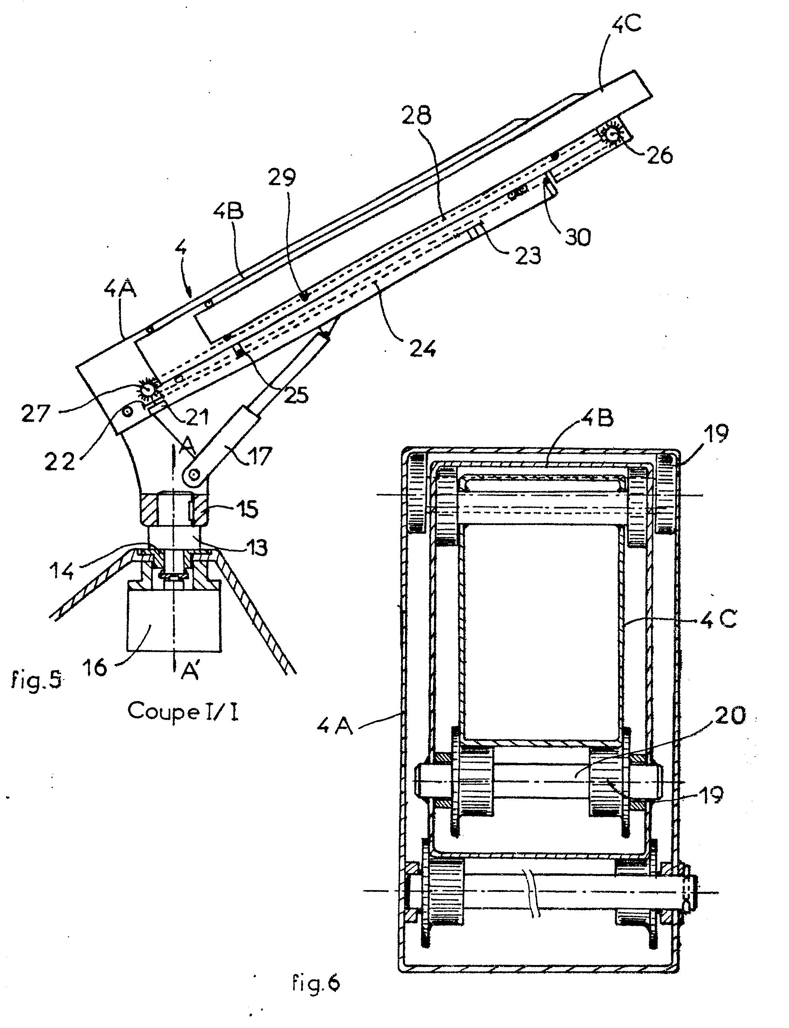

Comme on peut le voir plus particulièrement en figures 5
et 6, les tronçons 4A, 4B, 4C sont excentrés les uns par
rapport aux autres et l'axe médian longitudinal de chaque
tronçon contenu est déporté au-dessus de l'axe médian longitudinal de chaque tronçon contenant en sorte que la distance séparant les parois supérieures des tronçons soit le
plus réduit possible pour faciliter le glissement des branches sur le mât.
Pour renforcer cette caractéristique, le bord extérieur de
la paroi supérieure de chaque tronçon contenant est taillé
en biseau vers le tronçon contenu ou est prolongé par une
plaque métallique inclinée.

Les bords inférieurs et latéraux sont également prolongés
par une plaque en biseau ou par tout autre organe en sorte
que le mât présente une surface extérieure exempte d'aspè- rités et fermée en sorte que les branches ne puissent pénétrer dans le mécanisme du mât.

Les moyens de guidage des tronçons les uns par rapport aux autres sont constitués par des galets 19 montés rotatif sur des axes 20.

Comme on peut le voir plus particulièrement en figure 5, l'extrémité intérieure de chaque tronçon contenu est dotée de deux trains de galets roulant respectivement sur les faces internes supérieures et inférieures du tronçon contenant. Chaque tronçon contenu est supporté par un train de galets monté sur un support solidaire de la face interne inférieure de l'élément contenant au niveau de l'embouchure du dit élément contenant.

Le tronçon 4B est supporté par deux trains de galets montés sur un balancier.

Comme on peut le voir en figure 6, le guidage latéral des tronçons contenus est assuré par les flans latéraux des galets inférieurs 19.

La mobilité des tronçons contenus dans les tronçons contenants est assurée par les moyens de variation de la longueur du mât.

Comme représenté schématiquement en figure 5 , ces moyens sont constitués par deux systèmes d'entraînement par chaînes et pignons coopérant chacun avec un tronçon contenu. Le système d'entraînement du tronçon 4B par rapport au tronçon 4A comprend un organe moteur rotatif 21 fixé au tronçon 4A, un premier pignon 22 fixé à l'arbre de sortie du moteur 21, un second pignon 23 rotatif solidaire du tronçon 4A et une chaîne 24 engrenée à ces deux pignons.

Le tronçon 4B est doté d'une attache 25 à la chaîne 24.

Lorsque l'arbre de sortie de l'organe moteur est mû en rotation dans un sens ou dans l'autre, le tronçon 4B est mû en translation suivant un mouvement de sortie ou de rentrée. Le système d'entraînement du tronçon 4C par rapport au tronçon 4B comprend deux pignons dentés 26 et 27 rotatifs, solidaires du tronçon 4B et une chaîne 28 engrenée à ces deux pignons, fixée par deux attaches 29 et 30 respectivement au tronçon 4C et au tronçon 4A.
De ce fait, l'entraînement en translation du tronçon 4B provoque l'entraînement du tronçon 4C.

Le moteur 21 est de préférence un organe hydraulique, dans ce cas le circuit hydraulique du moteur comporte un distributeur 21A à trois positions actionnées par électro-aimant à partir de boutons poussoirs du boitier 8.

Au moins une des faces latérales extérieures de chaque tronçon contenu est dotée d'un ou plusieurs repères de signalisation de l'importance du télescopage.

Selon une forme préférée de réalisation, comme on peut le voir en figure 5A, ce repère est constitué par une surface géométrique 31 par exemple rectangulaire couvrant toute la longueur du tronçon correspondant, peinte en deux couleurs 32 et 33 séparées par une diagonale du rectangle ainsi formé. Cette disposition offre l'avantage d'une visualisation rapide et aisée de l'importance du déploiement des tronçons 4B et 4C.

En extrémité antérieure du mât, la machine est équipée d'un écran ou d'une ridelle 34 constituant arrêt des branches qui pourraient glisser sur le dit mât en sorte que celles-ci

0084990

ne puissent atteindre le bâti support 3 et ne puissent endommager les accessoires portés par ce bâti.

Comme on peut le voir en figures 1 et 2, la ridelle 34 à un axe perpendiculaire au mât et est inclinée sur l'un ou l'autre des côtés pour verser les branches.
Avantageusement, la ridelle est montée de manière amovible sur le tronçon 4A du mât.

A l'extrémité extérieure du tronçon 4C est montée la tête de travail 5 portant l'outil de coupe 6 et dotée de l'organe moteur 7 du dit outil.
Comme dit précédemment, la tête est constituée par au moins trois éléments rotatifs respectivement autour des axes CC', DD', et EE'.
De préférence, ces éléments sont articulés les uns par rapport aux autres suivant une configuration dite en chaîne ouverte.

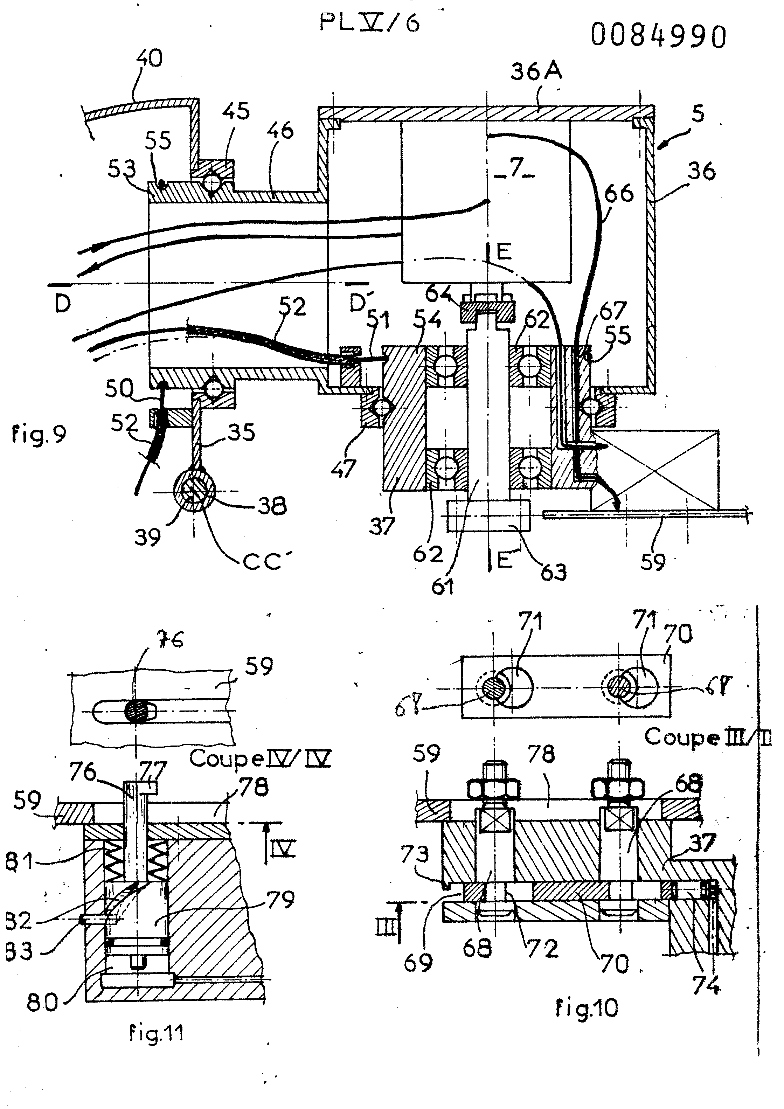

Comme on peut le voir plus particulièrement en figure 9, les éléments de la tête sont constitués respectivement par une platine 35 articulée en bout du mât 4 suivant l'axe CC' par un boitier 36 articulé à la dite platine suivant l'axe DD' transversal, à l'axe CC' et par un support 37 de l'outil de coupe articulé au dit boitier suivant l'axe EE' sécant à l'axe DD'.
De préférence, l'axe CC' d'articulation de la platine est parallèle à l'axe BB' d'articulation du mât à la chape 15.
L'axe CC' est disposé sensiblement sous le bord inférieur horizontal de l'extrémité du tronçon 4C.
La platine 35 se présente sous la forme d'une plaque rectangulaire de préférence métallique de même dimension que la section transversale du tronçon 4C.

Le bord inférieur de la platine reçoit un élément tubulaire 38 cylindrique dans lequel est engagé un organe d'articulation 39 fixé en extrémité du tronçon 4C.

Un soufflet 40 est disposé entre la platine et l'extrémité du mât 4, en sorte que les branches et les résidus de la coupe ne puissent s'introduire dans le dit mât.

La platine 35 est mobile, en rotation suivant une fraction de tour par exemple un demi-tour à partir d'une position suivant laquelle elle est disposée en regard de l'extrémité du mât.

La platine peut être bloquée en rotation suivant une de ses positions extrêmes ou bloquées en rotation suivant l'une quelconque des positions intermédiaires.

Les moyens de variation de la position angulaire de la platine par rapport au mât ou de passage de l'une quelconque des positions précédemment définies à une autre sont constitués par un organe moteur 41, articulé par une de ses extrémités à une chape dans le dernier tronçon 4C du mât par une première bielette 42 articulée d'une part dans une chape dans le tronçon 4C et d'autre part en extrémité libre de l'organe moteur et par une seconde bielette 43 articulée d'une part à la précédente et d'autre part à la platine.

L'organe moteur 41 est constitué de préférence par un vérin hydraulique alimenté par la pompe P.

Le circuit d'alimentation du vérin hydraulique est doté d'un distributeur 44,logé dans le tronçon 4C, à trois positions distinctes relatives respectivement au mouvement de sortie de la tige du vérin, au mouvement de rentrée et à l'arrêt de ces deux mouvements.

Le distributeur est commandé par électro-aimant à partir d'un ou plusieurs boutons poussoirs du boitier 8 et est disposé dans le tronçon 4C au plus près du vérin afin de réduire les temps de réponse.

Le mouvement de sortie de la tige par l'intermédiaire des bielettes 42 et 43 conduit à écarter la platine 35 de l'extrémité du mât 4, le mouvement de rentrée conduit à rapprocher la platine de l'extrémité du mât, et l'arrêt de ces deux mouvements permet le blocage en rotation de la platine autour de l'axe CC'.

La platine 35 est dotée d'un orifice transversal circulaire dans lequel ou autour duquel est disposé un palier 45. Dans ce palier est monté un moyen d'articulation 46 du boitier 36.

Comme dit précédemment, le boitier 36 s'articule à la platine suivant l'axe DD' transversalement à l'axe CC'.

De préférence l'axe DD' est disposé suivant le plan médian longitudinal du mât 4.

Le boitier 36 de toute forme connue est doté d'un couvercle 36A pour permettre l'accès aux différents organes qu'il renferme.

Le moyen d'articulation 46 du boitier est constitué par un élément cylindrique monté dans le palier 45.

Ce palier est de préférence constitué par un roulement à bille du type de ceux à quatre points de contacts.

Au boitier 36 est articulé le support 37 d'outil.

Le support 37 se présente par exemple sous la forme d'un élément tubulaire cylindrique de préférence métallique.

Ce support est monté dans un palier 47 du boitier du même type que le palier 45 et pénètre dans le dit boitier pour coopérer avec des moyens de variation de sa position angulaire par rapport au dit boitier par rotation autour de l'axe EE' transversalement à l'axe DD'.

De préférence ces deux axes sont concourants et perpendiculaire l'un par rapport à l'autre.

Les moyens de variation de la position angulaire du boitier (36) par rapport à la platine 35 ou du support 37 par rapport au dit boitier sont constitués chacun par un organe moteur 48 ou 49 et par un cable de traction 50 ou 51 actionné par le dit moteur et coopérant avec le boitier ou avec le support 37 pour communiquer à l'un ou l'autre un mouvement de rotation autour de leur axe.

L'organe moteur 48 ou 49 est avantageusement constitué par un vérin à double tige monté dans le tronçon 4C parallèlement à son axe longitudinal.
L'organe moteur 48 est affecté à la variation angulaire du boitier 36.

A chaque tige du vérin est fixée une des extrémités du câble 50 ou 51 de transmission.
Le câble 50 coopère avec le vérin 48 et le cable 51 coopère avec le vérin 49.
Les cables sont enroulés chacun autour d'une poulie de renvoi rotative dans une chape, dans le tronçon 4C.

Chaque cable est guidé par au moins deux gaines 52.
Chaque gaine comporte à chaque extrémité des organes d'arrêt dont un au moins est associé à des moyens de mise en tension du cable.
Un des organes d'arrêt de chaque gaine du cable 50 est solidaire de la platine 35 et un des organes d'arrêt des gaines du cable 51 est solidaire du support.

Pour coopérer avec le cable de traction, le boitier 36 et le support 37 présentent tous deux un tambour.

Le tambour 53 du boitier est ménagé en extrémité de l'élément 46.

Ce tambour 53 est protégé par le soufflet 40 comme on peut le voir en figure 9.

Le tambour 54 du support 37 est ménagé en son extrémité intérieure.

Ces deux tambours sont dotés chacun d'au moins une gorge 55 dans laquelle est disposé suivant au moins un demi-tour le cable de traction 50 ou 51.

Le cable 50 coopère avec le tambour 53 et le cable 51 coopère avec le tambour 54.

Le tambour 53 du boitier et l'élément tubulaire 46 sont creux pour permettre le passage du cable de traction 51 d'actionnement du support 37.

Les vérins 48 ou 49 sont alimentés chacun par la pompe P et leur circuit hydraulique comporte un distributeur 56 à trois positions distinctes relatives chacune à la commande de la sortie d'une des tiges, de la rentrée de cette tige et de l'arrêt en position.

Le mouvement de sortie de la tige conduit à la rotation dans un sens du boitier 36 ou du support autour de l'axe DD' ou de EE' par l'intermédiaire de la transmission par cable, le mouvement de rentrée conduit à la rotation en sens inverse du dit boitier ou du support et l'arrêt des mouvements conduit à bloquer en rotation le dit boitier ou le support.

Les distributeurs 56 sont actionnés par électro-aimant et sont disposés au plus près de leur verin afin de réduire le temps de réponse.

Avantageusement l'outil de coupe 6 porté par le support est parallèle à l'axe DD' et déporté latéralement par rapport à celui-ci d'une distance $\Delta$.

En outre, l'amplitude des mouvements des différents éléments de la tête est limitée à une fraction de tour par exemple à un demi-tour en sorte que quelle que soit la position de l'outil, celui-ci ne puisse toucher le mât 4.

A cet effet, la course des tiges des vérins 48 et 49 est limitée par tous moyens connus.
Cette disposition présente également l'avantage d'éviter l'emploi d'organes de sécurité visant au but sus-énoncé.

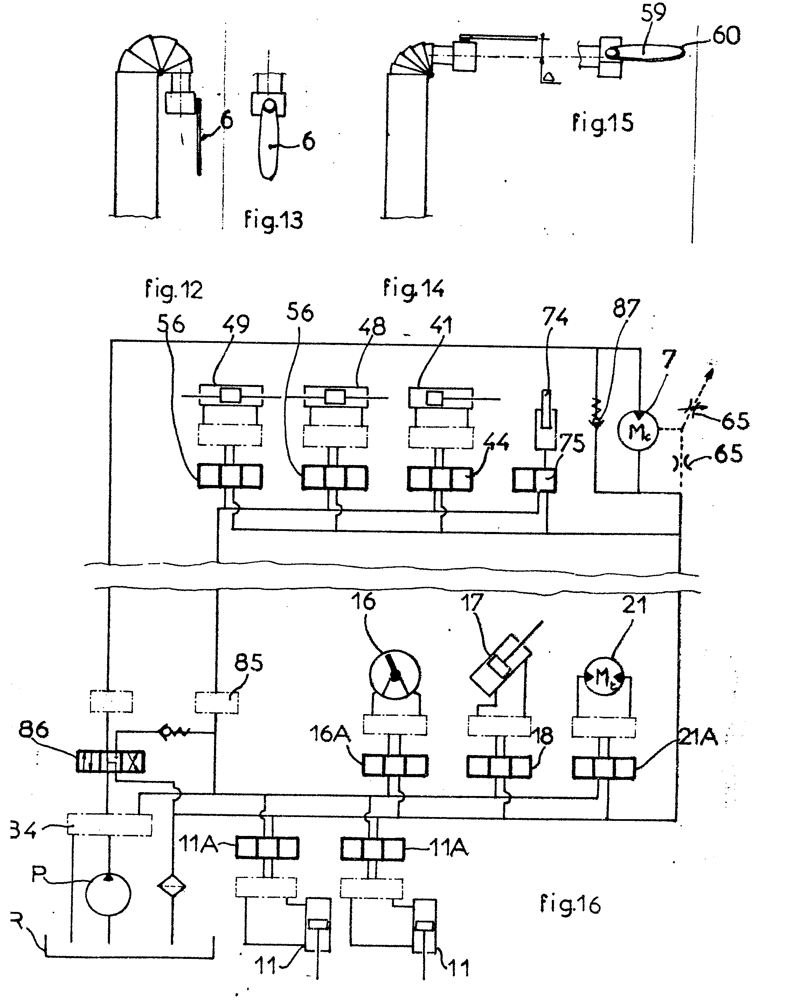

En figures 12 à 15, on a représenté la tête 5 et l'outil suivant différentes positions.
En figure 12, on a représenté le mât 4 verticalement.
L'axe DD' de la tête est disposé également verticalement.

Dans la position représentée en figure 12, l'outil de coupe est parallèle à la face inférieure du mât.
Le boitier de la tête peut tourner autour de l'axe DD' d'un quart de.tour dans un sens ou dans l'autre en sorte que l'outil puisse se disposer comme représenté en figure 13, perpendiculairement à la face inférieure du mât.

Dans la position représentée en figure 13, l'outil peut tourner autour de l'axe CC' pour venir se disposer au-dessus de la face latérale du mât.
Grâce au déport, cet outil ne pourra venir en contact du mât.

La figure 14 représente le mât en position verticale et la tête de travail en position horizontale.

La figure 15 montre la position de l'outil une fois que le boitier a tourné d'un huitième de tour autour de l'axe DD'.

Avantageusement, la tête 5 est articulée par la platine 35 à un élément longiligne 57 amovible logé dans le tronçon 4C du mât sur lequel est disposé l'organe extensible 41 et les organes moteurs de variation de la position angulaire du boitier et du support 37, en sorte que la tête et les moyens de variation de la position angulaire de ses éléments puissent être aisément dissociés du mât.
Cette disposition permet de faciliter le réglage de l'amplitude des mouvements de la tête et de faciliter l'entretien et la réparation des différents organes portés par cet élément.

Une trappe 58 est ménagée dans le tronçon 4C en arrière de l'élément 57 en sorte de permettre l'accès aux différentes connexions hydrauliques et électriques avant de retirer la tête et le dit élément.
Cet élément est avantageusement constitué par un profilé par exemple métallique de section transversale en U.

Selon une forme particulière de réalisation, la machine est dotée d'un outil 6 constitué par un guide 59 autour duquel se meut une chaîne de coupe 60, mais il est bien évident que cet outil pourra être constitué par tout autre organe par exemple une scie circulaire, une cisaille, une fraise, couteau vibrant, etc...

Selon la forme préférée de réalisation, l'organe moteur logé dans le boitier est en prise avec un arbre rotatif 61 dans au moins un palier 62 du support 37 autour de l'axe EE' ou autour d'un axe parallèle à celui-ci.
L'extrémité de cet arbre à l'extérieur du support est dotée d'un pignon 63 denté engrené avec la chaîne de coupe 60 pour la mouvoir autour du guide chaîne.

Le moteur 7, fixé dans le boitier, est avantageusement un organe hydraulique et est alimenté par la pompe P.

Un accouplement 64 est disposé entre le moteur et l'arbre du pignon de la chaîne.
De préférence, cet accouplement est du type joint de Oldham pour éviter que les a coups encaissés par l'outil de coupe ne se répercutent sur l'organe moteur.
Le graissage de l'outil de coupe est assuré par le débit de fuite du moteur 7.

Comme on peut le voir en figure 16, le circuit de fuite du moteur hydraulique est branché sur le circuit de retour des verins 41, 48 et 49 et est doté d'un piquage pour assurer le graissage.
Avantageusement, le débit du liquide de graissage et le débit du circuit de fuite vers le circuit de retour sont contrôlés par des étrangleurs 65 dont l'un est réglable.

La conduite du liquide de graissage est constituée par un conduit souple 66 associé à l'organe moteur et par un perçage 67 ménagé dans le support 37.
Ce perçage est associé par tous moyens connus au conduit souple.

Selon une forme préférée de réalisation, le support 37 est équipé de moyens de déverrouillage de l'outil de coupe en sorte de pouvoir retirer la tête du végétal ligneux lorsque le dit outil est coincé dans la coupe de la branche à sectionner.

Selon un premier exemple de réalisation, comme représenté en figure 10, le guide chaîne est fixé au support par deux goujons 68.
Ces goujons 68 sont montés chacun dans un alésage du support.

Transversalement aux alésages, le support est doté d'une fente 69 dans laquelle est monté en coulissement un premier moyen de déverrouillage 70.

Ce moyen est par exemple constitué par une plaque dotée de deux orifices 71 pour le passage des goujons.

Au niveau de la plaque 70, les goujons sont dotés d'une gorge 72.

L'orifice 71 de la plaque 70 est de type oblong à largeur croissante en sorte que sa plus faible largeur corresponde au diamètre à fond de gorge et que la plus grande largeur soit au moins égale au diamètre du goujon.

Comme on peut le voir en figure 20, l'orifice 71 est constitué par la réunion de deux perçages de diamètres différents.

En position de verrouillage, la plus faible largeur des orifices de la plaque est engagée dans la gorge des goujons. Pour déverrouiller l'outil, la plaque est poussée de manière à libérer la gorge des goujons, ce qui autorise leur retrait du support.

Pour limiter la course de la plaque et faire correspondre les axes du grand perçage avec celui du goujon, une butée 73 est disposée dans la fente 69.

La plaque est poussée par un second moyen de déverrouillage constitué par exemple par un piston 74 logé dans le support en regard de la plaque et actionné par la pression hydraulique.

Le circuit hydraulique du piston comporte un distributeur 75 à deux positions, commandé par électro-aimant à partir de boutons poussoirs du boitier 8.

Selon un second exemple de réalisation comme représenté
en figure 11, le moyen de déverrouillage est constitué par
une tige 76 se terminant par un ergot 77 de retention du
guide chaîne contre le support.

L'extrémité de tige portant l'ergot est engagée dans l'orifice oblong 78 du guide chaîne.
La tige est dotée d'un piston 79 monté dans une cavité 80 du supp
L'ergot est plaqué contre le guide grâce à l'action d'un
organe élastique 81 coopérant avec le piston 79.
La mise sous pression de la cavité 80 permet de vaincre
l'effort exercé par l'organe élastique et de repousser
l'ergot du guide chaîne.
En outre, conjointement à ce mouvement, l'ergot est orienté
dans l'axe de l'orifice oblong du guide chaîne pour faciliter le retrait de celui-ci.
A cet effet, le piston est doté d'une rainure hélicoïdale
82 dans laquelle est engagé un pion 83.

En figure 16, on a représenté schématiquement l'installation
hydraulique de la machine.

Sur le circuit de la pompe P est disposé un organe 84 permettant de délivrer à l'organe moteur 7 de l'outil de coupe un débit prioritaire constant.
Le débit complémentaire sera utilisé pour la commande des
mouvements du mât, des éléments de la tête, des moyens de
déverrouillage.

En outre, le circuit du débit complémentaire comporte un
limiteur de débit 85 réglable commandant l'alimentation des
vérins 41, 48, 49.
De ce fait, la vitesse des mouvements des éléments de la
tête peut être ajustée à la dextérité de l'opérateur.

L'installation hydraulique comporte également une électro-valve 86, au moins deux positions distinctes dont une permet de dériver le débit du liquide hydraulique du moteur de l'outil de coupe vers le circuit d'alimentation 16 et 17, en sorte d'obtenir des mouvements du mât plus rapides. Avantageusement, l'électro-valve comporte trois positions. Une des trois positions permet d'interrompre l'alimentation de l'organe moteur 7, et l'autre position autorise le passage du liquide hydraulique contenu dans la conduite d'amenée de l'organe moteur vers le réservoir R dans le cas où une action exercée sur la chaîne conduit à la rotation inverse du moteur 7.

Bien entendu, l'installation hydraulique est équipée de tous les organes de sécurité connus de l'homme de l'art. C'est ainsi que par exemple un clapet anti-retour 87 est disposé en parallèle avec le moteur 7 pour éviter l'éffet de cavitation lorsque l'arbre de sortie de celui-ci poursuit sur sa lancée un mouvement de rotation en l'absence d'alimentation du dit moteur.

La présente invention peut avantageusement être montée sur le plateau d'un véhicule motorisé ou autre.
La présente machine de traitement peut être avantageusement adaptée à tout type d'opération en hauteur ou à distance nécessitant une certaine précision.

La tête et le mât présentent un profil caréné et renferment les composants assurant l'orientation de l'outil.
Cette disposition conduit à faciliter la circulation de la tête dans les branches du végétal ligneux.

Il va de soi que la présente invention peut recevoir des aménagements et des variantes dans le domaine des équivalents techniques sans sortir du cadre du présent brevet.

REVENDICATIONS

0084990

R1/ Machine pour l'entretien des végétaux ligneux ou autres opérations à distance caractérisée en ce qu'elle est constituée par un bâti support (3) doté de moyens de mise à niveau (10, 11, 12) et par un mât (4), doté en extrémité d'un ou plusieurs outils de traitement, constitué d'au moins deux tronçons déplaçables l'un par rapport à l'autre suivant un mouvement de translation et/ou de rotation, associé à des moyens de variation de sa position angulaire par rapport 'au bâti, par rotation autour d'au moins un axe sensiblement vertical AA' et autour d'au moins un axe sensiblement horizontal BB' et à des moyens de commande de son déploiement en sorte de s'orienter vers le végétal ligneux, vers la zone de celui-ci à traiter et en sorte de se rapprocher de la dite zone.

R2/ Machine selon la revendication 1 caractérisée en ce qu'elle est dotée en bout du mât (4) d'une tête de travail (5) portant au moins un outil de traitement (6) par exemple de coupe et l'organe moteur (7) de celui-ci constituée d'au moins trois éléments actionnés chacun par au moins un moyen de variation de leur position angulaire les uns par rapport aux autres et par rapport au mât par rotation chacun autour d'au moins un axe CC' ou DD' ou EE' en sorte de positionner le dit outil transversalement à la branche à sectionner quelle que soit la position de celle-ci.

R3/ Machine selon la revendication 1 et la revendication 2, caractérisée en ce que les moyens de variation de la position angulaire du mât (4) par rotation autour de l'axe AA' sont constitués par un arbre (13) vertical rotatif dans au moins un palier, par une chape (15) calée sur l'arbre (13)

0084990

en dehors du bâti dans laquelle est monté, articulé le mât (4) suivant l'axe BB' et par un organe ou un système (16) d'entrainement en rotation de l'arbre (13) et donc de la chape (15) autour de l'axe vertical AA' suivant un tour ou une fraction de tour dans un sens ou dans l'autre en sorte d'orienter le mât.

R4/ Machine selon la revendication 1 caractérisée en ce que le moyen de variation de la position angulaire du mât par rotation autour de l'axe BB' est constitué par un organe extensible (17) articulé à la chape (15) et au dit mât (4).

R5/ Machine selon les revendications 1 et 3, caractérisée en ce que les moyens de variation de la position angulaire du mât sont montés sur un ensemble support mobile dans le bâti (3) autour de l'axe AA' ou d'un axe parallèle à celui-ci, actionné par un organe moteur en sorte que la rotation du mât (4) autour du dit axe AA' soit effectuée suivant deux mouvements de vitesse différente.

R6/ Machine selon la revendication 1 comportant un mât télescopique constitué de plusieurs tronçons (4A, 4B, 4C) montés les uns dans les autres caractérisée en ce que les dits tronçons sont excentrés les uns par rapport aux autres.

R7/ Machine selon la revendication 6 caractérisée en ce que l'axe médian longitudinal de chaque tronçon contenu est déporté au-dessus de l'axe médian longitudinal de chaque tronçon contenant en sorte que la distance séparant les parois supérieures de ces tronçons soit la plus réduite possible.

R8/ Machine selon la revendication 1 caractérisée en ce qu'elle est dotée d'un repère visuel sur au moins une des faces latérales de chaque tronçon et que le dit repère visuel est constitué par une surface rectangulaire peinte suivant deux couleurs séparées par une diagonale du rectangle ainsi défini.

R9/ Machine selon la revendication 2 caractérisée en ce que les éléments de la tête de travail (5) sont articulés les uns aux autres suivant une configuration dite en chaîne ouverte.

R10/ Machine selon la revendication 2 caractérisée en ce que les éléments de la tête sont constitués par une platine (35) articulée en bout du mât suivant l'axe CC', par un boitier (36) articulé à la dite platine suivant un axe DD' transversal au précédent et par un support d'outil (37) articulé au dit boitier suivant un axe EE' sécant au dit axe DD'.

R11/ Machine selon les revendications 2 et 10 caractérisée en ce que l'axe CC' d'articulation de la platine (35) par rapport au mât (4) est parallèle à l'axe BB' d'articulation du dit mât à la chape (15).

R12/ Machine selon la revendication 2 caractérisée en ce que les moyens de variation de la position angulaire de la platine par rapport au mât sont constitués par un organe moteur (41) articulé par une de ses extrémités à une chape dans le dernier tronçon (4C) du mât par une première bielette (42) articulée d'une part dans une chape dans le tronçon (4C) et d'autre part en extrémité libre de l'organe moteur et par une seconde bielette (43) articulée d'une part à la précédente et d'autre part à la platine.

R13/ Machine selon la revendication 2 caractérisée en ce que les moyens de variation de la position angulaire du boitier (36) par rapport à la platine (35) ou du support (37) par rapport au dit boitier sont constitués chacun par un organe moteur (48) ou (49) et par un câble de traction (50) ou (51) guidé par deux gaines (52), actionné par le dit moteur et coopérant avec le boitier ou avec le support (37) pour communiquer à l'un ou l'autre un mouvement de rotation autour de leur axe.

R14/ Machine selon les revendications 2 et 10 caractérisée en ce que le boitier et le support présentent tous deux un tambour (53) ou (54) doté d'au moins une gorge (55) dans laquelle est disposé suivant au moins un demi-tour le câble de traction.

R15/ Machine selon la revendication 14 caractérisée en ce que le tambour du boitier est creux pour le passage du cable de traction coopérant avec le tambour du support et pour le passage des conduites hydrauliques.

R16/ Machine selon la revendication 2 caractérisée en ce que l'outil (6) est déporté latéralement par rapport à l'axe DD' d'une distance Δ et que l'amplitude des mouvements des différents éléments de la tête est limitée à une fraction de tour en sorte que quelle que soit la position de l'outil, celui-ci ne puisse venir contre le mât.

R17/ Machine selon la revendication 2 caractérisée en ce que la tête (5) est articulée par la platine (35) à un élément longiligne (57) amovible logé dans le tronçon (4C) du mât sur lequel sont disposés l'organe extensible (41) et les organes moteurs de variation de la position angulaire du boitier et du support (37) en sorte que la tête et les moyens de variation de la position angulaire de ses éléments puissent être aisément dissociés du mât.

0084990

R18/ Machine selon les revendication 2 et 10 caractérisée en ce que le support (37) est doté de moyens de déverrouillage de l'outil de coupe.

R19/ Machine caractérisée en ce que le graissage de l'outil de coupe est assuré par le débit de fuite du moteur (7).

R20/ Machine selon les revendications 1 et 2 caractérisée en ce que son circuit hydraulique comporte un diviseur de débit (84) délivrant à l'organe moteur (7) un débit prioritaire constant.

R21/ Machine selon les R1 et R2 caractérisée en ce que le circuit hydraulique comporte une électro-valve (86) à au moins deux positions dont une permet de dériver le liquide hydraulique du circuit d'alimentation du moteur (7) vers le circuit hydraulique d'alimentation des organes (16), (17) et (21) en sorte d'obtenir des mouvements du mât plus rapide.

PL I/6

0084990

fig.1

fig.2

0084990

fig.3

fig.4

fig.5

Coupe I / I

fig.6

PL IV/6

0084990

fig.7

40
43
41
42
52
50
52
II
II
48
57
58

fig.8

4C
49
48

Coupe II/II

fig5a

31
33
32
31
33

fig.9

fig.11

Coupe Ⅳ/Ⅳ

Coupe Ⅲ/Ⅲ

fig.10

0084990

fig.13

59

60

fig.15

fig.12

fig.14

56   49   56   48   41   74   87   7

65

65

75

44

16   17   21

85

16A   18   21A

86

34

11A   11A

P

11   11

fig.16

R